# EUROPÄISCHE PATENTSCHRIFT

(11) **EP 0 407 748 B1**
(45) Veröffentlichungstag und Bekanntmachung des Hinweises auf die Patenterteilung: **30.08.1995**
(21) Anmeldenummer: 90111180.7
(22) Anmeldetag: 13.06.1990
(51) Int. Cl.: H04N 9/79

(54) **Videorecorder zur Aufzeichnung von Videosignalen unterschiedlicher Vertikalfrequenzen**
Video recorder for the recording of video signals with different vertical frequencies
Magnétoscope pour l'enregistrement de signaux vidéo aux fréquences verticales différentes

(30) Priorität: 08.07.1989 DE 3922534
(43) Veröffentlichungstag der Anmeldung: 16.01.1991
(73) Patentinhaber: Grundig E.M.V. Elektro-Mechanische Versuchsanstalt Max Grundig GmbH & Co. KG, 90762 Fürth (DE)
(72) Erfinder: Richter, Manfred, Grundig E.M.V., Kurgartenstrasse 37, D-8510 Fürth/Bay (DE)

(56) Entgegenhaltungen:
- EP-A- 0 095 247
- EP-A- 0 260 045
- FUNKSCHAU. no. 25, Dezember 1987, MUNCHEN DE Seiten 42 - 46; "Losgelöst von Normen"

## Beschreibung

Die Erfindung betrifft einen Videorecorder zur Aufzeichnung von Videosignalen mit den im Oberbegriff des Anspruchs 1 angegebenen Merkmalen.

Aus der Zeitschrift "Funkschau" 1987, Heft 25, S. 42-46, dem Tagungsband der 13. Jahrestagung der FKTG vom 16.-20. Mai 1988, S.791-797, und der EP-A2-0 243 739 ist ein Videorecorder zur transparenten Aufzeichnung von Videosignalen bekannt. Unter einer transparenten Aufzeichnung wird in der Fachsprache eine Videoaufzeichnung verstanden, bei der das wiedergegebene Signal unverfälscht und verzerrungsfrei dem Eingangssignal entspricht, und zwar unabhängig von der Art bzw. dem Fernsehstandard des Eingangssignals. Beim bekannten Videorecorder erfolgt die Aufzeichnung ohne vorherige Decodierung des ankommenden Signals und damit ohne eine Zerlegung des Signals in seine Einzelkomponenten. Das ankommende Signal wird zunächst analog/digitalgewandelt. Die aufeinanderfolgenden Zeilen des digitalen Signals werden auf zwei Aufzeichnungskanäle verteilt. In jedem der Aufzeichnungskanäle erfolgt eine Zeitexpansion, die Eintastung eines Synchronsignals, eine Digital/Analog-Wandlung, eine Vorverzerrung (Preemphase) und eine Frequenzmodulation. Das frequenzmodulierte Signal wird schließlich mittels einer Magnetkopfeinheit aufgezeichnet.

Ausgehend von diesem Stand der Technik liegt der Erfindung die Aufgabe zugrunde, einen Videorecorder mit den im Oberbegriff des Anspruchs 1 angegebenen Merkmalen derart auszugestalten, daß er sowohl zur Aufzeichnung eines Videosignals mit einer ersten Vertikalfrequenz als auch zur Aufzeichnung eines Videosignals mit einer zweiten Vertikalfrequenz geeignet ist.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelost. Vorteilhafte Ausgestaltungen der Erfindung ergeben sich aus den Ansprüchen 2 und 3. Die Ansprüche 4 und 5 beschreiben einen Videorecorder zur Wiedergabe von Videosignalen, die nach einem oder mehreren der Ansprüche 1-3 aufgezeichnet wurden. Eine vorteilhafte Ausgestaltung ist im Anspruch 6 beschrieben.

Die Vorteile der Erfindung bestehen insbesondere darin, daß zur Aufzeichnung und Wiedergabe von Videosignalen verschiedener Vertikalfrequenzen dieselben Signalverarbeitungsschaltungen verwendet werden können.

Weitere vorteilhafte Eigenschaften der Erfindung ergeben sich aus der Erläuterung eines Ausführungsbeispiels anhand der Figuren. Es zeigt:
- Figur 1 ein vereinfachtes Blockschaltbild zur Erläuterung der aufzeichnungsseitigen Signalverarbeitung;
- Figur 2 ein vereinfachtes Blockschaltbild zur Erläuterung der wiedergabeseitigen Signalverarbeitung,
- Figur 3 ein Blockschaltbild des Taktgenerators 14 von Figur 1 bzw. 2.

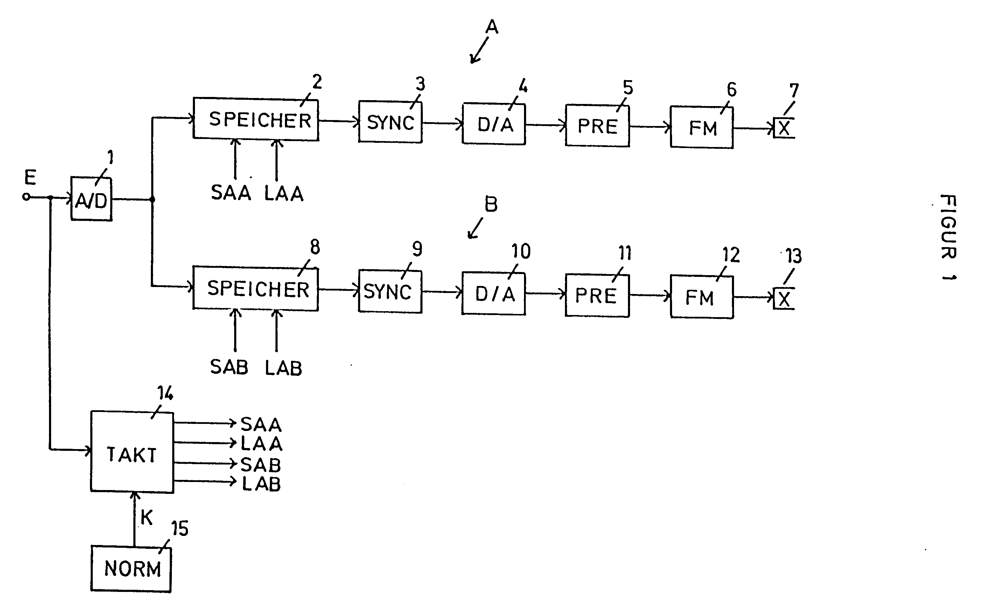

Die Figur 1 zeigt ein vereinfachtes Blockschaltbild zur Erläuterung der aufzeichnungsseitigen Signalverarbeitung. Dem Eingang E der Schaltung wird entweder ein analoges Fernsehsignal mit einer ersten Vertikalfrequenz, beispielsweise 50 Hz, oder ein analoges Fernsehsignal mit einer zweiten Vertikalfrequenz, beispielsweise 60 Hz, zugeführt. Dieses Signal wird in einem Analog/Digitalwandler 1 in ein Digitalsignal umgewandelt. Dieses Digitalsignal wird auf zwei Aufzeichnungskanäle A und B verteilt.

Jeder Aufzeichnungskanal enthält einen Speicher 2 bzw. 8, in welchem das Signal zeitexpandiert wird. Das zeitexpandierte Signal wird in einer Synchronsignal-Eintastschaltung 3 bzw. 9 mit einem Synchronsignal versehen. Das Ausgangssignal der Synchronsignal-Eintastschaltung-wird in einem Digital/Analog-Wandler 4 bzw. 10 in ein analoges Signal rückumgewandelt, einer Preemphase 5 bzw. 11 und einer Frequenzmodulation 6 bzw. 12 unterworfen und schließlich mittels einer Magnetkopfeinheit 7 bzw. 13 auf ein nicht gezeichnetes Magnetband aufgezeichnet.

Die genannte Aufteilung des Signals auf die beiden Aufzeichnungskanäle A und B wird durch einen Taktgenerator 14 festgelegt, welchem das Eingangssignal der Schaltung sowie ein in einer Normvorgabeeinrichtung 15 erzeugtes Kennsignal für die Vertikalfrequenz des Eingangssignal zugeführt wird, und welcher die Einschreibtaktsignale und die Auslesetaktsignale für die Speicher 2 und 8 erzeugt.

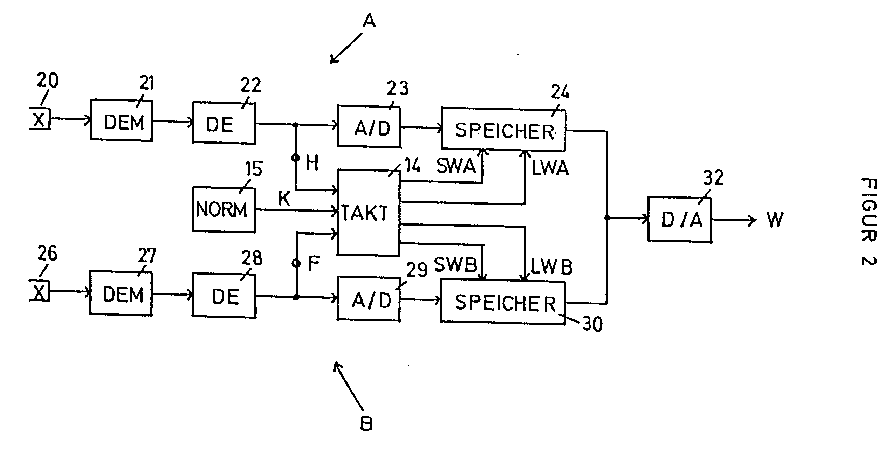

Die Figur 2 zeigt ein vereinfachtes Blockschaltbild zur Erläuterung der wiedergabeseitigen Signalverarbeitung. Das von den Magnetkopfeinheiten 20 bzw. 26 wiedergegebene Signal wird in einem Frequenzdemodulator 21 bzw. 27 demoduliert. Das demodulierte Signal wird einer Deemphase 22 bzw. 28 unterworfen und anschließend in einem Analog/Digitalwandler 23 bzw. 29 in ein Digitalsignal umgewandelt. Dieses Digitalsignal wird in einem Speicher 24 bzw. 30 durch eine geeignete Wahl der Einschreib- und Auslesetaktsignale zeitkomprimiert und am Ausgang der Speicher zu einem einkanaligen digitalen Signal zusammengefaßt. Das einkanalige digitale Signal wird in einem Digital/Analog-Wandler 32 in ein Analogsignal rückumgewandelt und steht als solches am Ausgang W der Schaltung zur Verfügung. Die genannten Einschreib- und Auslesetaktsignale werden in einem Taktgenerator 14 erzeugt, welchem die Ausgangssignale der Deemphase-Schaltungen 22 und 28 sowie ein in der Normvorgabeeinrichtung 15 erzeugtes Kennsignal für die Vertikalfrequenz des Eingangssignals zugeführt werden.

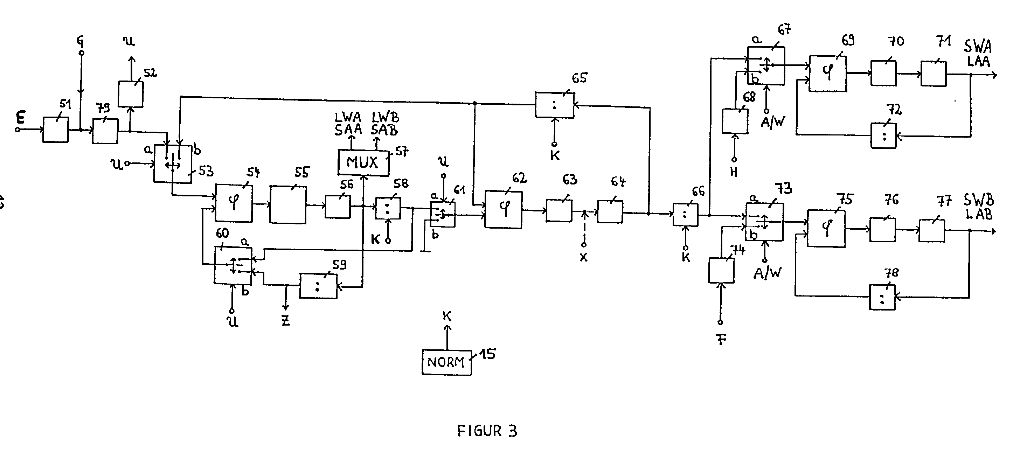

Die Figur 3 zeigt ein Blockschaltbild des Taktgenerators 14 zur aufzeichnungs- und wiedergabeseitigen Erzeugung der Einschreib- und Auslesetaktsignale für die Speicher 2 und 8 bzw. 24 und 30 von Figur 1 bzw. 2.

Im folgenden wird zunächst die aufzeichnungsseitige Erzeugung der Einschreib- und Auslesetaktsignale für die Speicher 2 und 8 von Figur 1 beschrieben. Aus dem am Eingang E anliegenden aufzuzeichnenden Signal werden in einem Synchronsignalseparator 51 die Horizontalsynchronimpulse extrahiert. Durch das Zeitfilter 79, welches beispielsweise durch ein Monoflop realisiert ist, wird - falls es sich beim Eingangssignal um ein hochzeiliges Signal handelt - jeder zweite Horizontalsynchronimpuls unterdrückt. Das Ausgangssignal des Zeitfilters wird an einen Kontakt a eines Schalters 53 angelegt, welcher bei der Aufzeichnung stets für die am Kontakt a anliegenden Synchronimpulse durchlässig ist. Das Ausgangssignal des Schalters 53 wird einem ersten Eingang eines Phasenvergleichers 54 zugeführt, welcher Bestandteil einer ersten Phasenregelschleife ist. Dem zweiten Eingang des Phasenvergleiches 54 wird über einen Schalter 60, welcher sich in der Schaltstellung b befindet, und einen Frequenzteiler 59 das Ausgangssignal des LC-Oszillators 56 der ersten Phasenregelschleife zugeführt. Mittels des am Ausgang des Phasenvergleichers 54 erhaltenen Fehlersignals wird über ein Siebglied 55 die Frequenz und die Phase des LC-Oszillators 56 derart nachgesteuert, daß die am Ausgang des LC-Oszillators zur Verfügung stehenden Taktsignale synchron mit den am Ausgang des Schalters 53 zur Verfügung stehenden Synchronimpulsen sind. Die den ungeradzahligen Zeilen des Eingangssignals zugeordneten Impulse des mit den Synchronimpulsen synchronen Taktsignals, welche an einem ersten Ausgang eines an den LC-Oszillator 56 angeschlossenen Multiplexers 57 erhalten werden, bilden ein Einschreibtaktsignal SAA für den im ersten Aufzeichnungskanal A angeordneten Speicher 2. Die den geradzahligen Zeilen des Eingangssignals zugeordneten Impulse des mit den Synchronimpulsen synchronen Taktsignals, welche an einem zweiten Ausgang des Multiplexers 57 erhalten werden, bilden ein Einschreibtaktsignal SAB für den im zweiten Aufzeichnungskanal B angeordneten Speicher 8.

Vom Ausgang des Frequenzteilers 59 werden Impulse abgeleitet, die nach einer von der Vertikalfrequenz des Videosignals abhängigen Frequenzteilung als Referenzsignale für die Servoschaltungen des Videorecorders verwendet werden (Ausgang Z).

Das Ausgangssignal des LC-Oszillators 56 wird einem Frequenzteiler 58 zugeführt, dessen Teilungsverhältnis umschaltbar ist und von der Vertikalfrequenz des am Eingang E anliegenden Signals abhängt. Der Frequenzteiler 58 erhält ein die Vertikalfrequenz kennzeichnendes Signal K von der Normvorgabevorrichtung 15. Bei dieser Normvorgabevorrichtung kann es sich um die Bedientastatur des Videorecorders oder um eine Schaltung handeln, welche beispielsweise aus den Synchronimpulsen des am Eingang E anliegenden Fernsehsignals automatisch erkennt, ob ein Signal mit einer Vertikalfrequenz von 50 Hz oder ein Signal mit einer Vertikalfrequenz von 60 Hz vorliegt.

Das Ausgangssignal des Frequenzteilers 58 wird über einen Schalter 61, welcher bei der Aufzeichnung stets für das am Kontakt a anliegende Signal durchlässig ist, einem ersten Eingang eines Phasenvergleichers 62 zugeführt, welcher Bestandteil einer zweiten Phasenregelschleife ist. Dem zweiten Eigang des Phasenvergleichers 62 wird über einen Frequenzteiler 65, dessen Teilungsverhältnis umschaltbar ist, das Ausgangssignal des spannungsgesteuerten Oszillators 64 der zweiten Phasenregelschleife zugeführt. Die Umschaltung des Teilungsverhältnisses des Frequenzteilers 65 erfolgt in Abängigkeit vom Normkennsignal K, wie es bereits oben im Zusammenhang mit dem Frequenzteiler 58 beschreiben wurde. Mittels des am Ausgang des Phasenvergleichers 62 erhaltenen Fehlersignals wird über ein Siebglied 63 die Frequenz und die Phase des spannungsgesteuerten Oszillators 64 derart nachgesteuert, daß beim Vorliegen eines Signals mit einer Vertikalfrequenz von 50 Hz am Ausgang des spannungsgesteuerten Oszillators 64 dieselbe stabile Referenzfrequenz zur Verfügung steht wie beim Vorliegen eines Signals mit einer Vertikalfrequenz von 60 Hz. Aus dieser für beide Vertikalfrequenzen identischen Referenzfrequenz werden - wie es nachstehend beschrieben wird - die Auslesetaktsignale für die Speicher 2 und 8 erzeugt.

Hierzu wird das Ausgangssignal des spannungsgesteuerten Oszillators 64 einem Frequenzteiler 66 mit umschaltbarem Teilungsverhältnis zugeführt. Die Umschaltung des Teilungsverhältnisses erfolgt in Abhängigkeit vom Normkennsignal K, wie es bereits oben im Zusammenhang mit dem Frequenzteiler 58 beschrieben wurde.

Das Ausgangssignal des Frequenzteilers 66 wird über einen Schalter 67, der bei der Aufzeichnung stets für das am Kontakt a anliegende Signal durchlässig ist, an einen ersten Eingang eines Phasenvergleichers 69 angelegt, welcher Bestandteil einer dritten Phasenregelschleife ist, die dem Aufzeichnungskanal A zugeordnet ist. Dem zweiten Eingang des Phasenvergleichers 69 wird über einen Frequenzteiler 72 das Ausgangssignal des spannungsgesteuerten Oszillators 71 der dritten Phasenregelschleife zugeführt. Mittels des am Ausgang des Phasenvergleichers 69 erhaltenen Fehlersignals wird über ein Siebglied 70 die Frequenz und die Phase des spannungsgesteuerten Oszillators 71 derart nachgesteuert, daß am Ausgang des spannungsgesteuerten Oszillators 71 ein für jede Vertikalfrequenz charakteristisches stabiles Auslesetaktsignal LAA für den im Aufzeichnungskanal A angeordneten Speicher 2 zur Verfügung steht.

Ferner wird das Ausgangssignal des Frequenzteilers 66 über einen Schalter 73, der bei der Aufzeichnung stets für das am Kontakt a anliegende Signal durchlässig ist, an einen ersten Eingang eines Phasenvergleichers 75 angelegt, welcher Bestandteil einer vierten Phasenregelschleife ist, die dem Aufzeichnungskanal B zugeordnet ist. Dem zweiten Eingang des Phasenvergleichers 75 wird über einen Frequenzteiler 78 das Ausgangssignal des spannungsgesteuerten Oszillators 77 der vierten Phasenregelschleife zugeführt. Mittels des am Ausgang des Phasenvergleichers 75 erhaltenen Fehlersignals wird über ein Siebglied 76 die Frequenz und die Phase des spannungsgesteuerten Oszillators 77 derart nachgesteuert, daß am Ausgang des spannungsgesteuerten Oszillators 77 ein für jede Vertikalfrequenz charakteristisches stabiles Auslesetaktsignal LAB für den im Aufzeichnungskanal B angeordneten Speicher 8 zur Verfügung steht.

Im folgenden wird die wiedergabeseitige Erzeugung der Einschreib- und Auslesetaktsignale für die Speicher 24 und 30 von Figur 2 beschrieben.

Aus dem am Eingang H anliegenden aus der dem Aufzeichnungskanal A entsprechenden Schrägspur des Magnetbandes wiedergegebenen Signal werden in einem Synchronsignalseparator 68 die - aufzeichnungsseitig in der Synchronsignal-Eintastschaltung 3 in das Signal eingetasteten - Synchronsignale extrahiert. Diese gelangen über den Schalter 67, der bei der Wiedergabe stets für das am Kontakt b anliegende Signal durchlässig ist, an den ersten Eingang des Phasenvergleichers 69 der dritten Phasenregelschleife. Dem zweiten Eingang des Phasenvergleichers 69 wird über den Frequenzteiler 72 das Ausgangssignal des spannungsgesteuerten Oszillators 71 zugeführt. Mittels des am Ausgang des Phasenvergleichers 69 erhaltenen Fehlersignals wird über das Siebglied 70 die Frequenz und die Phase des spannungsgesteuerten Oszillators 71 derart nachgesteuert, daß die am Ausgang des spannungsgesteuerten Oszillators 71 zur Verfügung stehenden Einschreibtaktsignale SWA für den im Wiedergabekanal A angeordneten Speicher 24 (siehe Figur 2) synchron mit den am Ausgang des Synchronsignalseparators 68 anliegenden zeitfehlerbehafteten Synchronimpulsen sind.

Aus dem am Eingang F anliegenden, aus der dem Aufzeichnungskanal B entsprechenden Schrägspur des Magnetbandes wiedergegebenen Signal werden in einem Synchronsignalseparator 74 die aufzeichnungsseitig in der Synchronsignal-Eintastschaltung 9 in das Signal eingetasteten Synchronsignale extrahiert. Diese gelangen über den Schalter 73, der bei der Wiedergabe stets für das am Kontakt b anliegende Signal durchlässig ist, an den ersten Eingang des Phasenvergleichers 75 der vierten Phasenregelschleife. Dem zweiten Eingang des Phasenvergleichers 75 wird über den Frequenzteiler 78 das Ausgangssignal des spannungsgesteuerten Oszillators 77 zugeführt. Mittels des am Ausgang des Phasenvergleiches 75 erhaltenen Fehlersignals wird über das Siebglied 76 die Frequenz und die Phase des spannungsgesteuerten Oszillators derart nachgesteuert, daß die am Ausgang des spannungsgesteuerten Oszillators 77 zur Verfügung stehenden Einschreibtaktsignale SWB für den im Wiedergabekanal B angeordneten Speicher 30 (siehe Figur 2) synchron mit den am Ausgang des Synchronsignalseparators 74 anliegenden zeitfehlerbehafteten Synchronimpulsen sind.

Wie wiedergabeseitig die Auslesetaktsignale für die Speicher 24 und 30 (siehe Figur 2) erzeugt werden, ist davon abhängig, ob die Wiedergabe quartzstabil oder synchron zu einem externen Synchronsignal erfolgen soll.

Soll die Wiedergabe synchron zu einem externen Synchronsignal erfolgen, dann wird der in der Figur 3 gezeigten Schaltung entweder über den Eingang G das externe Synchronsignal zugeführt oder es werden aus einem am Eingang E anliegenden Signal in der Synchronsignaltrennstufe 51 die Horizontalsynchronimpulse abgetrennt. Diese gelangen über das Zeitfilter 79 an einen Synchronsignaldetektor 52, der beim Vorliegen eines Synchronsignals an seinem Ausgang ein Synchronkennsignal U erzeugt. Dieses Synchronkennsignal U liegt als Schaltersteuersignal an den Schaltern 53, 60 und 61 an und bringt die Schalter 53 und 61 beim Vorliegen eines Synchronsignals jeweils in die Schaltstellung a und den Schalter 60 in die Schaltstellung b.

Folglich wird das am Eingang G bzw. E anliegende externe Synchronsignal über den Schalter 53 als Referenzsignal an den ersten Eingang des Phasenvergleichers 54 der ersten Phasenregelschleife angelegt. Dem zweiten Eingang des Phasenvergleichers 54 wird über den Schalter 60, welcher sich in der Schaltstellung b befindet, und den Frequenzteiler 59 das Ausgangssignal des LC-Oszillators 56 zugeführt. Mittels des am Ausgang des Phasenvergleichers 54 erhaltenen Fehlersignals wird über das Siebglied 55 die Frequenz und die Phase des LC-Oszillators 56 derart nachgesteuert, daß die am Ausgang des LC-Oszillators zur Verfügung stehenden Taktsignale synchron mit dem externen Synchronsignal sind. Die den ungeradzahligen Zeilen des Videosignales zugeordneten Impulse des mit den externen Synchronsignalen synchronen Taktsignals, welche an einem ersten Ausgang des an den LC-Oszillator 56 angeschlossenen Multiplexers 57 erhalten werden, bilden ein Auslesetaktsignal LWA für den im Wiedergabekanal A angeordneten Speicher 24. Die den geradzahligen Zeilen des Videosignals zugeordneten Impulse des mit den externen Synchronsignalen synchronen Taktsignals, welche an einem zweiten Ausgang des an den LC-Oszillator 56 angeschlossenen Multiplexers 57 erhalten werden, bilden ein Auslesetaktsignal LWB für den im Wiedergabekanal B angeordneten Speicher 30.

Liegt am Eingang G bzw. E kein externes Synchronsignal an, dann erfolgt die Wiedergabe quartzstabil. Dies geschieht im einzelnen wie folgt:

Wegen des Fehlens externer Synchronsignale erzeugt der Synchronsignaldetektor 52 kein Synchronkennsignal. Folglich werden die Schalter 53, 60 und 61 jeweils in die Schaltstellung b und der Schalter 60 in die Schaltstellung a gebracht. Dies bewirkt, daß die aus den Schaltungsblöcken 62-65 bestehende zweite Phasenregelschleife als Festfrequenzoszillator wirkt. Mittels eines über einen nicht gezeichneten Schalter am Eingang X anliegenden Referenzsignals kann ggfs. die Festfrequenz des spannungsgesteuerten Oszillators 64 eingestellt werden. Die am Ausgang des spannungsgesteuerten Oszillators 64 zur Verfügung stehende Festfrequenz wird dem Teiler 65 mit umschaltbarem Teilungsverhältnis zugeführt. Die Umschaltung des Teilungsverhältnisses erfolgt in Abhängigkeit eines die Vertikalfrequenz kennzeichnenden Signals K, welches in der Normvorgabevorrichtung 15 erzeugt wird. Bei dieser Normvorgabevorrichtung kann es sich um die Bedientastatur des Videorecorders oder um eine Schaltung handeln, welche beispielsweise aus den wiedergegebenen Synchronimpulsen automatisch erkennt, ob ein Signal mit einer Vertikalfrequenz von 50 Hz oder ein Signal mit einer Vertikalfrequenz von 60 Hz vorliegt. Am Ausgang des Frequenzteilers 65 steht ein quartzstabiles, für die jeweilige Vertikalfrequenz charakteristisches Referenzsignal zur Verfügung.

Dieses wird über den Schalter 53 dem ersten Eingang des Phasenvergleichers 54 der ersten Phasenregelschleife zugeführt. Dem zweiten Eingang des Phasenvergleichers 54 wird über den Schalter 60, welcher sich in der Schaltstellung a befindet, und den Frequenzteiler 58 das Ausgangssignal des LC-Oszillators 56 zugeführt. Das Teilungsverhältnis des Frequenzteilers 58 wird in Abhängigkeit von dem die Vertikalfrequenz kennzeichnenden Signal K umgeschaltet. Mittels des am Ausgang des Phasenvergleichers 54 erhaltenen Fehlersignals wird über das Siebglied 55 die Frequenz und die Phase des LC-Oszillators 56 derart nachgesteuert, daß die am Ausgang des LC-Oszillators 56 zur Verfügung stehenden Taktsignale synchron mit dem am Ausgang des Frequenzteilers 65 zur Verfügung stehenden, für die jeweilige Vertikalfrequenz charakteristischen Festfrequenzsignal sind.

Die den ungeradzahligen Zeilen des Videosignals zugeordneten Impulse des mit dem jeweiligen Festfrequenzsignal synchronen Taktsignals, welche am ersten Ausgang des an den LC-Oszillator 56 angeschlossenen Multiplexers 57 erhalten werden, bilden ein Auslesetaktsignal LWA für den im Wiedergabekanal A angeordneten Speicher 24. Die den geradzahligen Zeilen des Videosignals zugeordneten Impulse des mit dem jeweiligen Festfrequenzsignal synchronen Taktsignals, welche am zweiten Ausgang des an den LC-Oszillator 56 angeschlossenen Multiplexers 57 erhalten werden, bilden ein Auslesetaktsignal LWB für den im Wiedergabekanal B angeordneten Speicher 30.

## Patentansprüche

1. Videorecorder zur Aufzeichnung von Videosignalen mit unterschiedlichen Vertikalfrequenzen, mit
- einer Einrichtung zur Aufteilung aufeinanderfolgenden Zeilen der Videosignale auf unterschiedliche Aufzeichnungskanäle,
- einer Speichereinheit zur Zeitexpansion der jedem Aufzeichnungskanal zugeführten Videosignale,
- einem Taktgenerator zun Erzeugen der Einschreib- und Auslesetaktsignale für die Speichereinheiten aus den Videosignalen,
- einer in jedem Aufzeichnungskanal vorgesehenen Eintastschaltung für Synchronsignale,
- einem in jedem Aufzeichnungskanal vorgesehenen Frequenzmodulator, und
- einer in jedem Aufzeichnungskanal vorgesehenen Videokopfeinheit zur Aufzeichnung des frequenzmodulierten Signals,
**dadurch gekennzeichnet**, daß der Taktgenerator (14) aufweist:
- eine erste Phasenregelschleife (54, 55, 56, 57, 59, 60) zur Erzeugung der Einschreibtaktsignale (SAA, SAB) unter Verwendung der Horizontalsynchronimpulse der aufzuzeichnenden Videosignale,
- eine über einen Frequenzteiler (58), dessen Teilungsverhältnis von der Vertikalfrequenz des aufzuzeichnenden Videosignals abhängt, an den Ausgang der ersten Phasenregelscheife angeschlossene zweite Phasenregelschleife (62-65) zur Erzeugung eines für alle Vertikalfrequenzen identischen Referenzsignals, und
- pro Aufzeichnungskanal eine über einen weiteren Frequenzteiler (66), dessen Teilungsverhältnis von der Vertikalfrequenz des aufzuzeichnenden Videosignals abhängt, an den Ausgang der zweiten Phasenregelschleife angeschlossene weitere Phasenregelschleife (69-72, 75-78), die unter Verwendung des Referenzsignals für die im zugehörigen Aufzeichnungskanal angeordnete Speichereinheit (2, 8) für jede Vertikalfrequenz charakteristische Auslesetaktsignale (LAA, LAB) erzeugt.

2. Videorecorder nach Anspruch 1, **dadurch gekennzeichnet**, daß die zweite Phasenregelschleife (62-65) einen Frequenzteiler (65) mit umschaltbarem Teilungsverhältnis aufweist.

3. Videorecorder nach Anspruch 1 oder 2, **dadurch gekennzeichnet**, daß die erste Phasenregelschleife (54-60) einen spannungsgesteuerten LC-Oszillator (56) aufweist.

4. Videorecorder zur Wiedergabe eines mit einem Videorecorder nach einem oder mehreren der Ansprüche 1-3 aufgezeichneten Videosignals mit unterschiedlichen Vertikalfrequenzen, mit
- einer in jedem Wiedergabekanal vorgesehenen Videokopfeinheit zur Wiedergabe des aufgezeichneten Signals,
- einem in jedem Wiedergabekanal vorgesehenen Frequenzdemodulator,
- einer in jedem Wiedergabekanal vorgesehenen Speichereinheit zur Zeitkompression des demodulierten Signals,
- einem Taktgenerator zun Erzeugen der Einschreib- und Auslesetaktsignale für die Speichereinheiten aus den Videosignalen, und
- einer Einrichtung zur Zusammenfassung der Ausgangssignale der Wiedergabekanäle zu einem einkanaligen Signal,
**dadurch gekennzeichnet**, daß der Takfgenerator (14) aufweist:
- eine erste Phasenregelschleife (54,55,56,57,59,60) zur Erzeugung des Auslesetakte (LWA,LWB) aus einem externen Synchronsignal, welches dieser zugeführt wird,
- eine über einen Frequenzteiler (58), dessen Teilungsverhältnis von der Vertikalfrequenz des wiedergegebenen Videosignals abhängt, angeschlossene zweite Phasenregelschleife (62-65) zur Erzeugung eines für alle Vertikalfrequenzen identischen Referenzsignals, und
- pro Aufzeichnungskanal eine über einen weiteren Frequenzteiler (66), dessen Teilungsverhältnis von der Vertikalfrequenz des wiedergegebenen Videosignals abhängt, an den Ausgang der zweiten Phasenregelschleife angeschlossene weitere Phasenregelschleife (69-72, 75-78) zur Erzeugung der Einschreibtaktsignale (SWA, SWB) der aus dem wiedergegebenen Signal extrahierte Synchronimpulse als Referenzsignal zugeführt werden.

5. Videorecorder zur Wiedergabe eines mit einem Videorecorder nach einem oder mehreren der Ansprüche 1-3 aufgezeichneten Videosignals mit unterschiedlichen Vertikalfrequenzen, mit
- einer in jedem Wiedergabekanal vorgesehenen Videokopfeinheit zur Wiedergabe des aufgezeichneten Signals,
- einem in jedem Wiedergabekanal vorgesehenen Frequenzdemodulator,
- einer in jedem Wiedergabekanal vorgesehenen Speichereinheit zur Zeitkompression des demodulierten Signals,
- einem Taktgenerator zun Erzeugen der Einschreib und Auslesetaktsignale für die Speichereinheiten aus den Videosignalen, und
- einer Einrichtung zur Zusammenfassung der Ausgangssignale der Wiedergabekanäle zu einem einkanaligen Signal,
**dadurch gekennzeichnet**, daß der Takfgenerator (14) aufweist:
- eine erste Phasenregelschleife (54,55,56,57,59,60) zur Erzeugung des Auslesetaktsignale (LWA,LWB) aus einem in einer zweiten Phasenregelschleife erzeugten für jeweilige Vertikalfrequenz charakteristischen Festfrequenzsignal, und
- pro Aufzeichnungskanal eine über einen Frequenzteiler (66), dessen Teilungsverhältnis von der Vertikalfrequenz des wiedergegebenen Videosignals abhängt, an den Ausgang der zweiten Phasenregelschleife angeschlossene weitere Phasenregelschleife (69-72, 75-78) zur Erzeugung der Einschreibtaktsignale (SWA, SWB) der aus dem wiedergegebenen Signal extrahierten Synchronimpulse als Referenzsignal zugeführt werden.

6. Videorecorder nach Anspruch 4 und 5, **dadurch gekennzeichnet**, daß er einen Synchronsignaldetektor (52) zur Erzeugung eines Synchronkennsignals (U) aufweist.

## Claims

1. Video recorder for recording video signals having different field frequencies, comprising
- a device for distributing consecutive lines of the video signals over different recording channels,
- a memory unit for the time expansion of the video signals fed to each recording channel,
- a clock generator for generating the write-in and readout clock signals for the memory units from the video signals,
- an insertion circuit for synchronization signals provided in each recording channel,
- a frequency modulator provided in each recording channel, and
- a video head unit provided in each recording channel for recording the frequency-modulated signal,
characterized in that the clock generator (14) has:
- a first phase-control loop (54, 55, 56, 57, 59, 60) for generating the write-in clock signals (SAA, SAB) using the horizontal synchronization pulses of the video signals to be recorded,
- a second phase-control loop (62 - 65) connected via a frequency divider (58), whose division ratio depends on the field frequency of the video signal to be recorded, to the output of the first phase-control loop for generating a reference signal which is identical for all the field frequencies, and
- one further phase-control loop (69 - 72, 75 - 78 ) for each recording channel which is connected via a further frequency divider (66), whose division ratio depends on the field frequency of the video signal to be recorded, to the output of the second phase-control loop and which generates read-out clock signals (LAA, LAB) which are characteristic of each field frequency for the memory unit (2, 8) provided in the associated recording channel using the reference signal.

2. Video recorder according to Claim 1, characterized in that the second phase-control loop (62 - 65) has a frequency divider (65) having switchable division ratio.

3. Video recorder according to Claim 1 or 2, characterized in that the first phase-control loop (54 - 60) is a voltage-controlled LC oscillator (56).

4. Video recorder for playing back a video signal having different field frequencies recorded with a video recorder according to one or more of Claims 1 - 3, comprising
- a video head unit provided in each playback channel for playing back the recorded signal,
- a frequency demodulator provided in each playback channel,
- a memory unit provided in each playback channel for the time compression of the demodulated signal,
- a clock generator for generating the write-in and readout clock signals for the memory units from the video signals, and
- a device for combining the output signals of the playback channels to form a single-channel signal,
characterized in that the clock generator (14) has:
- a first phase-control loop (54, 55, 56, 57, 59, 60) for generating the read-out clocks (LWA, LWB) from an external synchronization signal which is fed to said loop,
- a second phase-control loop (62 - 65) connected via a frequency divider (58), whose division ratio depends on the field frequency of the played back video signal, for generating a reference signal which is identical for all the field frequencies, and
- one further phase-control loop (69 - 72, 75 - 78) for each recording channel connected via a further frequency divider (66), whose division ratio depends on the field frequency of the played back video signal, to the output of the second phase-control loop for generating the write-in clock signals (SWA, SWB), to which further phase-control loop (69 - 72, 75 - 78) synchronization pulses extracted from the played-back signal are fed as reference signal.

5. Video recorder for playing back a video signal recorded with a video recorder according to one or more of Claims 1 - 3 having different field frequencies, comprising
- a video head unit provided in each playback channel for playing back the recorded signal,
- a frequency demodulator provided in each playback channel,
- a memory unit provided in each playback channel for the time compression of the demodulated signal,
- a clock generator for generating the write-in and readout signals for the memory units from the video signals,
- a device for combining the output signals of the playback channels to form a single-channel signal,
characterized in that the clock generator (14) has:
- a first phase-control loop (54, 55, 56, 57, 59, 60) for generating the read-out signals (LWA, LWB) from a fixed-frequency signal generated in a second phase-control loop and characteristic of the particular field frequency, and
- a further phase-control loop (69 - 72, 75 - 78) for each recording channel connected via a frequency divider (66), whose division ratio depends on the field frequency of the played-back video signal, to the output of the second phase-control loop for generating the write-in clock signals (SWA, SWB), to which further phase-control loop (69 - 72, 75 - 78) synchronization pulses extracted from the played-back signal are fed as reference signal.

6. Video recorder according to Claims 4 and 5, characterized in that it has a synchronization-signal detector (52) for generating a synchronization identification signal (U).

## Revendications

1. Enregistreur vidéo pour l'enregistrement de signaux vidéo possédant des fréquences verticales différentes, comportant
- un dispositif pour répartir des lignes successives des signaux vidéo dans différents canaux d'enregistrement,
- une unité de mémoire pour dilater le temps des signaux vidéo envoyés à chaque canal d'enregistrement,
- un générateur de cadence pour produire les signaux de cadence d'enregistrement et de lecture pour les unités de mémoire à partir des signaux vidéo,
- un circuit d'immixtion prévu dans chaque canal d'enregistrement, pour des signaux de synchronisation, un modulateur de fréquence prévu dans chaque canal d'enregistrement, et
- une unité à tête vidéo prévue dans chaque canal d'enregistrement pour l'enregistrement du signal modulé en fréquence
caractérisé en ce que le générateur de cadence (14) comporte :
- une première boucle de régulation de phase (54,55,56,57, 59,60) pour produire les signaux de cadence d'écriture (SAA, SAB) moyennant l'utilisation des impulsions de synchronisation horizontale des signaux vidéo devant être enregistrés,
- une seconde boucle de régulation de phase (62-65), qui est raccordée à la sortie de la première boucle de régulation de phase par l'intermédiaire d'un diviseur de fréquence (58), dont le taux de division dépend de la fréquence verticale du signal vidéo devant être enregistré, et qui sert à produire un signal de référence identique pour toutes les séquences verticales, et
- pour chaque canal d'enregistrement, une autre boucle de régulation de phase (69-72, 75-78), qui est raccordée à la sortie de la seconde boucle de régulation de phase, par l'intermédiaire d'un autre diviseur de fréquence (66), dont le taux de division dépend de la fréquence verticale du signal vidéo devant être enregistré, et qui, moyennant l'utilisation du signal de référence, produit des signaux de cadence de lecture (LAA, LAB), qui sont caractéristiques de chaque fréquence verticale, pour l'unité de mémoire (2;8) disposée dans le canal d'enregistrement associé.

2. Enregistreur vidéo selon la revendication 1, carctérisé en ce que la seconde boucle de régulation de phase (62-65) possède un diviseur de fréquence (67) possédant un rapport de division commutable.

3. Enregistreur vidéo selon la revendication 1 ou 2, caractérisé en ce que la première boucle de régulation de phase (54-60) possède un oscillateur LC (56) commandé par la tension.

4. Enregistreur vidéo pour la reproduction d'un signal vidéo enregistré avec un enregistreur vidéo selon une ou plusieurs des revendications 1-3 et comportant des fréquences verticales différentes, comprenant
- une unité à tête vidéo prévue dans chaque canal de reproduction, pour la reproduction du signal enregistré,
- un modulateur de fréquence prévu dans chaque canal de reproduction,
- une unité de mémoire prévue dans chaque canal de reproduction, pour la compression temporelle du signal démodulé,
- un générateur de cadence pour la production des signaux de cadence d'écriture et de lecture pour les unités de mémoire, à partir des signaux vidéo, et
- un dispositif pour réunir les signaux de sortie des canaux de reproduction en un signal à canal unique,
caractérisé en ce que le générateur de cadence (14) comporte :
- une première boucle de régulation de phase (54,55,56,57, 59,60) pour produire les cadences de lecture (LWA, LWB) à partir d'un signal externe de synchronisation, qui est envoyé à cette boucle,
- une seconde boucle de régulation de phase (62-65), qui est raccordée par l'intermédiaire d'un diviseur de fréquence (58), dont le rapport de division dépend de la fréquence verticale du signal vidéo reproduit, et qui sert à produire un signal de référence identique pour toutes les fréquences verticales, et
- pour chaque canal d'enregistrement, une autre boucle de régulation de phase (69-72,75-78), qui est raccordée à la sortie de la seconde boucle de régulation de phase par l'intermédiaire d'un autre diviseur de fréquence (66), dont le rapport de division dépend de la fréquence verticale du signal vidéo reproduit, et qui sert à produire les signaux de cadence d'écriture (SWA,SWB) des impulsions de synchronisation extraites du signal reproduit, en tant que signal de référence.

5. Enregistreur vidéo pour la reproduction d'un signal vidéo enregistré avec un enregistreur vidéo selon une ou plusieurs des revendications 1-3, comprenant
- une unité à têtes vidéo prévue dans chaque canal de reproduction, pour la reproduction du signal enregistré,
- un démodulateur de fréquence prévu dans chaque canal de reproduction,
- une unité de mémoire prévue dans chaque canal de reproduction et servant à réaliser la compression dans le temps du signal démodulé,
- un générateur de cadence servant à produire les signaux d'écriture et de lecture pour les unités de mémoire, et
- un dispositif pour réunir les signaux de sortie des canaux de reproduction pour former un signal à canal unique,
caractérisé en ce que le générateur de cadence (14) comprend :
- une première boucle de régulation de phase (54,55,56,57, 59,60) pour produire les signaux de cadence de lecture (LWA, LWB) à partir d'un signal de fréquence produit dans une seconde boucle de régulation de phase et caractéristique pour la fréquence verticale respective, et
- pour chaque canal d'enregistrement, une autre boucle de régulation de phase (65-72, 75-78), raccordée à la sortie de la seconde boucle de régulation de phase par l'intermédiaire d'un diviseur de fréquence (66), dont le rapport de division dépend de la fréquence verticale du signal vidéo reproduit et qui sert à produire les signaux de cadence d'écriture (SWA, SWB) des impulsions de synchronisation extraites du signal reproduit, en tant que signal de référence.

6. Enregistreur vidéo selon les revendications 4 et 5, caractérisé en ce qu'il comporte un détecteur de signaux de synchronisation (52) servant à produire un signal caractéristique de synchronisation (U).
